(19) Europäisches Patentamt
European Patent Office
Office européen des brevets

(11) Veröffentlichungsnummer: **0 000 352**
**B1**

# (12) EUROPÄISCHE PATENTSCHRIFT

(45) Veröffentlichungstag der Patentschrift: **05.05.82**

(51) Int. Cl.³: **C 07 F 9/48,** C 08 K 5/53, C 10 M 1/46

(21) Anmeldenummer: **78100271.2**

(22) Anmeldetag: **29.06.78**

(54) **Aromatische cyclische Phosphonigsäure-diester und mit diesen Verbindungen stabilisiertes organisches Material.**

(30) Priorität: **07.07.77 CH 8431/77**

(43) Veröffentlichungstag der Anmeldung: **24.01.79 Patentblatt 79/2**

(45) Bekanntmachung des Hinweises auf die Patenterteilung: **05.05.82 Patentblatt 82/18**

(84) Benannte Vertragsstaaten: **BE CH DE FR GB**

(56) Entgegenhaltungen:
**EP 78 100 271.2**
**DE-A-20 34 887**
**US-3 702 878**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Rasberger, Michael, Dr., Waltersgrabenweg 6, CH-4125 Riehen (CH)**

**EP 0 000 352 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Aromatische cyclische Phosphonigsäure-diester und mit diesen Verbindungen stabilisiertes organisches Material

Die Erfindung betrifft neue Phosphonite, ihre Herstellung, Verwendung als Stabilisatoren für Kunststoffe und Elastomere, sowie die damit stabilisierten Polymeren.

Phosphonite sind als Stabilisatoren bekannt, insbesondere das 6-Phenoxy-dibenz[c,e]-[1,2]-oxaphosphorin und das 6-(2,6-Di-tert.-butyl-4-methyl-phenoxy)-dibenz-[c,e]-[1,2]-oxaphosphorin (Beispiele 9 und 10 der DT-OS 2.034.887). Diese Phosphonite genügen jedoch nicht in jeder Hinsicht den hohen Anforderungen, denen ein Stabilisator genügen soll, insbesondere hinsichtlich Lagerstabilität, Wasseraufnahme, Hydrolyseempfindlichkeit, Verarbeitungsstabilisierung, Farbverbesserung, Flüchtigkeit, Verträglichkeit und Lichtschutzverbesserung.

Aufgabe der Erfindung war es, Stabilisatoren zu schaffen, die diese Nachteile nicht oder nur in schwächerem Mass aufweisen.

Demgemäss betrifft die Erfindung Phosphonite der Formeln I und II

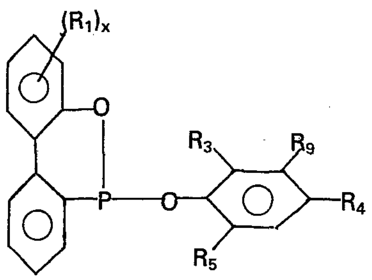

(I)

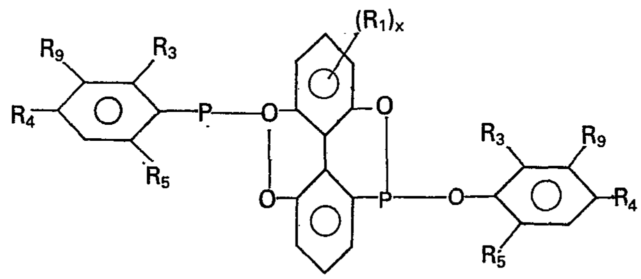

(II)

worin

$R_1$ $C_1$–$C_8$ Alkyl ist,

x 0,1 oder 2 ist,

$R_3$ und $R_5$ unabhängig voneinander Wasserstoff, gegebenenfalls substituiertes $C_1$–$C_{25}$ Alkyl, $C_3$–$C_4$ Alkenyl, $C_3$–$C_4$ Alkinyl, $C_5$–$C_{12}$ Cycloalkyl, $C_6$–$C_{13}$ α-Methylcycloalkyl, $C_7$–$C_{14}$ Aralkyl, oder $C_7$–$C_{14}$ Alkaryl sind,

$R_4$ eine der für $R_3/R_5$ gegebenen Bedeutungen hat oder ($C_1$–$C_{18}$ Alkoxy)-carbonyl, ($C_5$–$C_7$ Cycloalkoxy)-carbonyl, Phenoxycarbonyl, ($C_1$–$C_{12}$ Alkyl)-phenoxycarbonyl, $C_1$–$C_{18}$ Alkoxy oder 2–($C_1$–$C_{18}$ Alkoxycarbonyl)-äthyl ist,

wobei nicht alle drei Reste $R_3$, $R_4$ und $R_5$ zugleich Wasserstoff sind, und

wobei im Fall von $R_3$ und $R_5$ gleich tert.-Butyl $R_4$ nicht Methyl ist, und

$R_9$ Wasserstoff, und falls $R_3$ Wasserstoff ist, auch Methyl bedeutet.

$R_1$ ist geradkettiges oder verzweigtes Alkyl, z. B. Methyl, i-Propyl oder tert.-Butyl.

$R_3$ und $R_5$ sind vor allem $C_1$–$C_8$ Alkyl, z. B. Methyl, Aethyl, i-Propyl, tert.-Butyl, tert.-Pentyl oder tert.-Octyl, $C_3$–$C_4$ Alkenyl, z. B. Allyl oder Methallyl, $C_3$–$C_4$ Alkinyl, z. B. Propargyl, $C_5$–$C_{12}$ Cycloalkyl, z. B. Cyclohexyl, $C_7$–$C_8$ Alkyl)–$C_5$–$C_8$ Cycloalkyl, z. B. α-Methylcyclohexyl, $C_7$–$C_{14}$ Aralkyl, z. B. Benzyl, α-Methylbenzyl oder α,α-Dimethylbenzyl, $C_7$–$C_{14}$ Alkaryl, wie ($C_1$–$C_8$ Alkyl)-phenyl, z. B. Tolyl. $R_3$ und $R_5$ kann auch substituiertes Alkyl sein, wie 1,1-Dimethyl-4-äthoxycarbonyl-butyl, oder Di-($C_1$–$C_8$ Alkyl)-phosphonomethyl, z. B. Diäthylphosphonomethyl, oder Aminoalkyl, insbesondere Aminomethyl, wie ($C_1$–$C_{18}$ Alkyl)-aminomethyl oder Di-Alkyl)-aminomethyl, z. B. Dimethylaminomethyl oder Di-n-butylaminomethyl, oder ($C_1$–$C_{18}$ Acyloxy)-methyl oder ($C_1$–$C_{18}$ Acylthio)-methyl, wie ($C_1$–$C_{18}$ Alkanoyloxy)methyl, oder ($C_1$–$C_{18}$ Alkanoylthio)-methyl, N-alkyliertes ($C_1$–$C_{18}$ Carbamoyloxy)-methyl, n-alkyliertes ($C_1$–$C_{18}$ Carbamoylthio)-methyl oder N-alkyliertes ($C_1$–$C_{18}$ Thiocarbamoylthio)-methyl, z. B. Acetoxymethyl, Propionylthiomethyl, N,N-Di-n-butyl-carbamoyloxymethyl, N,N-Di-n-butyl-carbamoylthio-methyl, N,N-Di-n-butyl-thiocarbamoylthio-methyl oder N,N-Di-n-octyl-thiocarbamoylthio-methyl. $R_5$ kann zudem auch sein: $C_1$–$C_{18}$ Alkoxycarbonyl-methyl, z. B. Methoxycarbonylmethyl oder n-Octadecyloxycarbonylmethyl, oder 2-($C_1$–$C_{18}$ Alkoxycarbonyl)-äthyl, wie 2-(Methoxycarbonyl)-äthyl, oder Cyanomethyl.

$R_4$ hat insbesondere die für $R_3/R_5$ allgemein und als bevorzugt angegebene Bedeutung und ist insbesondere ($C_1$–$C_{18}$ Alkoxy)-carbonyl, z. B. Methoxycarbonyl oder n-Octadecyloxycarbonyl, Phenoxycarbonyl, oder ($C_1$–$C_{12}$ Alkyl)-phenoxycarbonyl, z. B. 2,4-Di-tert.-butyl-phenoxycarbonyl, oder ($C_5$–$C_7$ Cycloalkoxy)-carbonyl, z. B. Cyclohexyloxycarbonyl.

Besonders bevorzugt sind Phosphonite der Formel I, worin

x 0 ist,

$R_3$ und $R_5$ unabhängig voneinander Wasserstoff, $C_1$–$C_{12}$ Alkyl, Cyclohexyl, α-Methylcyclohexyl, Benzyl, α,α-Dimethylbenzyl, Phenyl oder ($C_1$–$C_{18}$ Alkoxy)-carbonyl-$C_1$–$C_8$-alkyl sind, und

$R_4$ eine der für $R_3/R_5$ gegebenen Bedeutungen hat oder ($C_1$–$C_{18}$ Alkoxy)-carbonyl, oder 2-($C_1$–$C_{18}$ Alkoxycarbonyl)-äthyl ist.

Vor allem betrifft die Erfindung Phosphonite der Formel I, worin

x 0 ist,

$R_3$ und $R_5$ unabhängig voneinander $C_1$–$C_{12}$ Alkyl, Cyclohexyl, α-Methylcyclohexyl, Benzyl oder α,α-Dimethylbenzyl sind, oder eines von $R_3$ und $R_4$ Wasserstoff ist und das andere obige Bedeutung hat, und

$R_4$ Wasserstoff, $C_1$–$C_{12}$ Alkyl, ($C_1$–$C_{18}$ Alkoxy)-carbonyl oder 2-($C_1$–$C_{18}$ Alkoxycarbonyl)-äthyl ist.

Bevorzugt sind insbesondere die folgenden Verbindungen, neben den in den Beispielen genannten Verbindungen:

1. 6-(2,6-Di-äthyl-phenoxy)-dibenz[c,e]-[1,2]oxaphosphorin,
2. 6-(2,4,6-Tri-methyl-phenoxy)-dibenz[c,e]-[1,2]oxaphosphorin,
3. 6-(2,6-Di-isopropyl-phenoxy)-dibenz[c,e]-[1,2]oxaphosphorin,
4. 6-(2,6-Di-tert.-butyl-4-n-octadecyloxycarbonyl-phenoxy)-dibenz[c,e]-[1,2]oxaphosphorin,
5. 6-[2,6-Di-tert.-butyl-4-diäthylphosphono-phenoxy)-dibenz[c,e]-[1,2]oxaphosphorin,
6. 6-(2-Methyl-4-di-n-butylaminomethyl-6-tert.-butyl-phenoxy)-dibenz[c,e]-[1,2]oxaphosphorin,
7. 6-[2,6-(Di-1,1-dimethyl-4-äthoxycarbonyl-butyl)-4-methyl-phenoxy]-dibenz[c,e]-[1,2]oxaphosphorin,
8. 6-(2-Methyl-4-n-octadecyloxycarbonylmethyl-6-tert.-butyl-phenoxy)-dibenz[c,e]-[1,2]oxaphosphorin,
9. 6-(2,6-Di-i-propyl-4-(2-methoxycarbonyl-äthyl)-phenoxy)-dibenz[c,e]-[1,2]oxaphosphorin,
10. 6-[2-Methyl-4-(2,4-di-tert.-butyl-phenoxy-carbonyl)-6-tert.-butyl-phenoxy]-dibenz[c,e]-[1,2]oxaphosphorin,
11. 6-(2-Cyclohexyl-4-tert.-octyl-phenoxy)-dibenz[c,e]-[1,2]oxaphosphorin,
12. 6-(2-Methyl-4-diäthylphosphonomethyl-6-α,α-dimethyl-benzyl-phenoxy)-dibenz[c,e]-[1,2]oxaphosphorin,
13. 2-tert.-Butyl-6-(2,4-di-tert.-butyl-phenoxy)-dibenz[c,e]-[1,2]oxaphosphorin,
14. 2,4-Di-tert.-butyl-6-(2,4-di-tert.-butyl-phenoxy)-dibenz[c,e]-[1,2]oxaphosphorin,
15. 2,4-Di-tert.-butyl-6-(2,6-di-i-propyl-4-tert.-octyl-phenoxy)-dibenz[c,e]-[1,2]oxaphosphorin,
16. 2,4-Di-tert.-butyl-6-[2-methyl-4-(2-n-octadecyloxycarbonyläthyl)-6-tert.-butylphenoxy]-dibenz[c,e]-[1,2]oxaphosphorin,
17. 2,4-Di-tert.-butyl-6-(2,6-di-tert.-butyl-4-methylphenoxy)-dibenz[c,e]-[1,2]oxaphosphorin,
18. 2,4-Di-tert.-butyl-6-(2,6-di-tert.-butyl-phenoxy)-dibenz[c,e]-[1,2]oxaphosphorin,
19. 6-(2,6-Di-tert.-butyl-4-diäthylphosphonomethyl-phenoxy)-dibenz[c,e]-[1,2]oxaphosphorin,
20. 6-(2,6-Di-tert.-butyl-4-tert.-octyl-phenoxy)-dibenz[c,e]-[1,2]oxaphosphorin,
21. 6-(2-tert.-Butyl-4-methyl-6-α-methylcyclohexyl-phenoxy)-dibenz[c,e]-[1,2]oxaphosphorin,
22. 6-[2,6-Di-(α,α-dimethylbenzyl)-4-n-octadecyloxycarbonylmethyl-phenoxy]-dibenz[c,e]-[1,2]oxaphosphorin,
23. 6-(2-tert.-Butyl-4-methyl-6-tert.-pentyl-phenoxy)-dibenz[c,e]-[1,2]oxaphosphorin,
24. 6-(2-tert.-Butyl-4,6-di-tert.-octyl-phenoxy)-dibenz[c,e]-[1,2]oxaphosphorin,
25. 6-[2,6-Di-tert.-butyl-4-(2,4-di-tert.-butyl-phenoxy-carbonyl)-phenoxy]-dibenz[c,e]-[1,2]oxaphosphorin,
26. 6-[2,6-Di-tert.-pentyl-4-(2-äthoxycarbonyl-äthyl)-phenoxy]-dibenz[c,e]-[1,2]oxaphosphorin,
27. 6-[2-tert.-Butyl-4-methyl-6-(1,1-dimethyl-4-äthoxycarbonyl-butyl)-phenoxy]-dibenz[c,e]-[1,2]oxaphosphorin,
28. 6-(2,6-Di-tert.-butyl-4-cyanomethyl-phenoxy)-dibenz[c,e]-[1,2]oxaphosphorin,
29. 6-(2-tert.-Butyl-5-methyl-phenoxy)-dibenz[c,e]-[1,2]oxaphosphorin,
30. 6-(2,4-Di-tert.-butyl-5-methyl-phenoxy)-dibenz[c,e]-[1,2]oxaphosphorin.

Die Phosphonite der Formeln I und II können nach an sich bekannten Methoden hergestellt werden, insbesondere durch Veresterungs- bzw. Umesterungsreaktionen, z. B. dadurch, dass man ein Phosphonit der Formeln

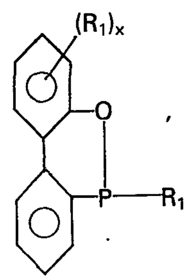
,
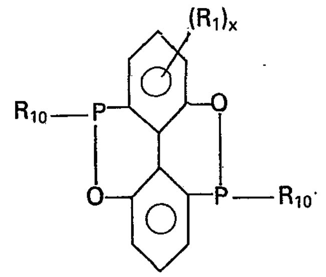

worin $R_{10}$ eine reaktionsfähige Gruppe ist und $R_1$ und x die oben angegebene Bedeutung haben, mit einem Phenol der Formel

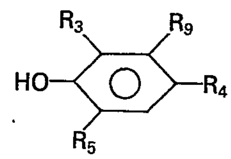

worin $R_3$, $R_4$, und $R_9$ die oben angegebene Bedeutung haben, umsetzt.

Eine reaktionsfähige Gruppe $R_{10}$ ist beispielsweise Halogen, insbesondere Chlor; Alkoxy oder gegebenenfalls substituiertes Phenoxy.

Die Umsetzung kann in an sich bekannter Weise geschehen, z. B. durch Erhitzen, bevorzugt auf über etwa 80° C, insbesondere über 150° C, wie 150–240°, z. B. 220°, wobei H $R_{10}$ abgespalten wird, wobei $R_{10}$ die oben angegebene Bedeutung hat; oder aber in Gegenwart von Basen, wie Aminen, z. B. Triäthylamin, Pyridin, N,N-Dimethylanilin oder Natriumcarbonat, bevorzugt in einem inerten Lösungsmittel, wie aprotische Lösungsmittel, z. B. Ligroin, Toluol, Dimethylformamid, Dimethylacetamid, Sulfolan, Methyläthylketon, Acetonitril oder Essigester, wobei aber auch Aminbasen im Überschuss verwendet werden können und dabei als Lösungsmittel dienen (vgl. auch DT-OS 2.034.887).

Die Ausgangsstoffe sind bekannt oder können, sofern sie neu sind, in Analogie zu bekannten hergestellt werden. P-Cl Phosphonite sind z. B.

aus der DT-OS 2.034.887 bekannt, während die Ausgangsphenole seit langem bekannte Verbindungen und vielfach handelsüblich sind.

Die Verbindungen der Formel I/II können gemäss der vorliegenden Erfindung als Stabilisatoren für Kunststoffe und Elastomere gegen deren Schädigung durch Einwirkung von Sauerstoff, Licht und Wärme verwendet werden. Beispiele für solche Kunststoffe sind die in der DT-OS 2.456.864 auf den Seiten 12-14 aufgeführten Polymeren.

Geeignete Substrate sind z. B.:

1. Polymere, die sich von einfach ungesättigten Kohlenwasserstoffen ableiten, wie Polyolefine, wie z. B. Polyäthylen, niederer und hoher Dichte, das gegebenenfalls vernetzt sein kann, Polypropylen, Polyisobutylen, Polymethylbuten-I, Polymethylpenten-I.
2. Mischungen der unter 1 genannten Homopolymeren, wie z. B. Gemische von Polypropylen und Polyäthylen und Polyisobutylen.
3. Copolymere der dem unter 1 genannten Homopolymeren zugrundeliegenden Monomeren, wie Äthylen-Propylen-Copolymere, Propylen-Buten-I-Copolymere, Propylen-Isobutylen-Copolymere, Äthylen-Buten-I-Copolymere, sowie Terpolymere von Äthylen und Propylen mit einem Dien, wie z. B. Hexadien, Di-cyclopentadien oder Äthylidennorbornen.
4. Polystyrol und seine Copolymeren, wie SAN, ABS, IPS, ASA und EP modifizierte Styrolcopolymerisate.
5. Polyamide.
6. Lineare Polyester.
7. Polyurethane.
8. Polycarbonate.
9. Elastomere, wie Polybutadien, SBR, Polyisopren, Polychloropren und Nitrilkautschuk.
10. Thermoplastische Elastomere, wie SBS, SIS und S-EP-S.
11. Polyvinylchlorid.
12. Schmieröle auf synthetischer oder mineralischer Basis.

Ein weiterer Gegenstand vorliegender Erfindung ist ein Verfahren zum Stabilisieren von Polymeren gegen den thermooxidativen Abbau während Herstellung, Isolierung, Verarbeitung und Gebrauch, das dadurch gekennzeichnet ist, dass man dem Polymeren mindestens eine Verbindung der Formel I/II zusetzt.

Die Verbindungen der Formel I/II werden den Substraten in einer Konzentration von 0,005 bis 5 Gew.-%, berechnet auf das zu stabilisierende Material, einverleibt.

Vorzugsweise werden 0,01 bis 1,0, besonders bevorzugt 0,02 bis 0,5 Gew.-% der Verbindungen, berechnet auf das zu stabilisierende Material, in dieses eingearbeitet. Die Einarbeitung kann beispielsweise durch Einmischen mindestens einer der Verbindungen der Formel I/II und gegebenenfalls weiterer Additive nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels, erfolgen.

Die neuen Verbindungen können auch in Form eines Masterbatches, der diese Verbindungen beispielsweise in einer Konzentration von 2,5 bis 25 Gew.-% enthält, den zu stabilisierenden Kunststoffen zugesetzt werden.

Im Falle von vernetztem Polyäthylen werden die Verbindungen vor der Vernetzung beigefügt.

Die Erfindung betrifft daher auch die durch Zusatz von 0,01 bis 5 Gew.-% einer Verbindung der Formel I/II stabilisierten Kunststoffe, die gegebenenfalls noch andere Zusätze enthalten können. Die so stabilisierten Kunststoffe können in verschiedenster Form angewendet werden z. B. als Folien, Fasern, Bändchen, Profile oder als Bindemittel für Lacke, Klebemittel oder Kitte.

Als Beispiele weiterer Additive, mit denen zusammen die Stabilisatoren eingesetzt werden können, sind zu nennen: Antioxydantien, UV-Absorber und Lichtschutzmittel, wie 2-(2'-Hydroxyphenyl)-benztriazole, 2,4-Bis-(2'-hydroxyphenyl)-6-alkyl-s-triazine, 2-Hydroxybenzophenone, 1,3-Bis-(2'-hydroxybenzoyl)-benzole, Ester von gegebenenfalls subsituierten Benzoesäuren, Acrylate, des weiteren Nickelverbindungen, sterisch gehinderte Amine, Oxalsäurediamide, Metalldesaktivatoren, Phosphite, peroxidzerstörende Verbindungen, Polyamidstabilisatoren, basische Co-Stabilisatoren, Nukleierungsmittel oder sonstige Zusätze wie z. B. Weichmacher, Gleitmittel, Emulgatoren, Füllstoffe, Russ, Asbest, Kaolin, Talk, Glasfasern, Pigmente, optische Aufheller, Flammschutzmittel, Antistatica.

Die Erfindung wird mit dem nachfolgenden Beispiel näher erläutert.

Beispiele 1–18

10 g 6-Chlor-dibenz[c,e]-[1,2]oxaphosphorin (0,0426 Mol), 10 g 2,6-Di-isopropyl-4-tert.-butylphenol und 30 ml Triäthylamin werden für 15 Stunden bei einer Innentemperatur von 110° C zur Reaktion gebracht.

Nach beendeter Reaktion nimmt man das Reaktionsgut in 100 ml Toluol auf, filtriert die Lösung, engt das Filtrat unter vermindertem Druck ein und kristallisiert den Rückstand aus Acetonitril um. Das 6-(2,6-Di-isopropyl-4-tert.-butyl-phenoxy)-dibenz[c,e]-[1,2]oxaphosphorin schmilzt bei 128 bis 130° C (Verbindung 1).

In analoger Weise erhält man folgende Verbindungen:

2. 6-(2,6-Di-tert.-butyl-phenoxy)-dibenz[c,e]-[1,2]oxaphosphorin, F. 152° C,
3. 6-(2,6-Di-tert.-butyl-4-isopropyl-phenoxy)-dibenz[c,e]-[1,2]oxaphosphorin, F. 95–96° C,
4. 6-[2,6-Di-tert.-butyl-4-(2-methoxycarbonyl-äthyl)-phenoxyl]-dibenz[c,e]-[1,2]oxaphosphorin, F. 100° C,
5. 6-[2,6-Di-tert.-butyl-4-(2-n-octadecyloxycarbonyl-äthyl)-phenoxy]-dibenz[c,e]-[1,2]oxaphosphorin, F. 75° C,
6. 6-(2,4,6-Tri-tert.-butyl-phenoxy)-dibenz[c,e]-[1,2]oxaphosphorin, F. 149° C,
7. 6-(2,4,6-Tri-isopropyl-phenoxy)-dibenz[c,e]-[1,2]oxaphosphorin, F. 112° C,
8. 6-(2,4-Di-tert.-butyl-phenoxy)-dibenz[c,e]-[1,2]oxaphosphorin, F. $< 50°$ C,

9. 6-(2,4-Di-tert.-butyl-6-methyl-phenoxy)-dibenz[c,e]-[1,2]oxaphosphorin, F. 110° C,

10. 6-(2-tert.-Butyl-6-methyl-phenoxy)-dibenz-[c,e]-[1,2]oxaphosphorin, F. 98–100° C,

11. 6-(2,4-Di-tert.-octyl-phenoxy)-dibenz[c,e]-[1,2]oxaphosphorin, F. 109° C,

12. 6-{2,4-Di-(α,α-dimethylbenzyl)phenoxy}-dibenz[c,e]-[1,2]oxaphosphorin, F. 130° C,

13. 6-(2,4-Di-tert.-amyl-phenoxy)-dibenz[c,e]-[1,2]oxaphosphorin, Kp. 180° C/0,05 mm Hg,

14. 6-(2-tert.Butyl-phenoxy)-dibenz[c,e]-[1,2]oxaphosphorin, Kp- 163° C/0,04 mm Hg,

15. 6-(2,6-Di-tert.-butyl-4-methoxy-phenoxy)-dibenz[c,e]-[1,2]oxaphosphorin, F. 104–105° C,

16. 6-(1,1,3,3-Tetramethyl-6-tert.butyl-5-indanoxy)-dibenz[c,e]-[1,2]oxaphosphorin, F. 140° C,

17. 6-(1,1,3,3-Tetramethyl-6-tert.octyl-5-indanoxy)-dibenz[c,e]-[1,2]oxaphosphorin, F. 126° C,

18. 6-(2,4-Dimethyl-6-t.butylphenoxy)-dibenz-[c,e]-[1,2]oxaphosphorin, F. 126° C.

Beispiel 19

100 Teile Polycarbonat-Granulat (welches zuvor in einem Vacuum-Ofen während 12 Stunden bei 120° C getrocknet worden war) werden in einem Schüttelapparat mit 0,1 Teile der Verbindung 11 gemischt.

Das erhaltene Gemisch wird in einem Labor-Einschneckenextruder bei 280° C Düsentemperatur extrudiert und anschliessend granuliert. Das zu Vergleichszwecken benötigte Granulat ohne Zusatz wird auf analoge Weise hergestellt. Vor der Weiterverarbeitung werden die Granulate in einem Vakuum-Ofen während 12 Stunden bei 120° C getrocknet.

Die Prüfung auf Wirksamkeit des Stabilisators gegen das Vergilben des Materials erfolgt in einer Labor-Spitzgussmaschine bei maximal 310° C. Die Vergilbung der 2 mm dicken Spitzgussplatten wird durch Messung des Yellowness Index nach ASTM 1925–63 beurteilt. Die Werte in der Tabelle zeigen, dass die stabilisatorhaltigen Platten sowohl direkt nach deren Herstellung als auch nach Ofenalterung bei 140° C eine geringere Vergilbung aufweisen. (Höheren Yellowness Index = stärkere Vergilbung).

| Stabilisator | Yellowness Index | |
|---|---|---|
| | Anlieferzustand | Nach 100 Tagen, 140° C Ofenalterung |
| Keiner | 9,3 | 48,3 |
| 0,1% Verbindung Nr. 11 | 4,2 | 44,2 |

Beispiel 20

100 Teile Polypropylen-Pulver (Propathene HF 20 der Firma ICI) werden mit 0,1 Teil Calciumstearat, mit der Verbindung 11 in den in den untenstehenden Tabellen angegebenen Mengen und mit Pentaerythrit-tetrakis-[3-(3,5-ditertiärbutyl-4-hydroxy-phenyl)-propionat) (0,1 Teil in Tabelle A und 0,05 Teilen in Tabelle B) vermischt.

Diese Gemische werden einerseits 5× hintereinander in einem Einschneckenextruder bei maximal 260° C andererseits 3× hintereinander im gleichen Extruder bei 280° C extrudiert, in jedem Fall mit 100 Umdrehungen pro Minute. Jeweils nach der 1., 3. und 5., beziehungsweise nach der 1. und 3. Extrusion wird der Schmelzindex des Polymeren gemessen, wobei die Belastung 2160 g, die Temperatur 230° C und die Messgrösse g/10 Min. ist. Der Abbau des Polymeren äussert sich in einem Ansteigen des Schmelzindex.

Tabelle A

| Stabilisator | Schmelzindex nach mehreren Extrusionen | | | | |
|---|---|---|---|---|---|
| | bei 260° C | | | bei 280° C | |
| | 1. | 3. | 5. | 1. | 3. |
| keiner | 6,3 | 8,9 | 15,0 | 7,1 | 21,4 |
| mit 0,025 Teilen Verbindung 11 | 3,0 | 3,8 | 5,1 | 3,4 | 5,1 |

Tabelle B

| Stabilisator | Schmelzindex nach mehreren Extrusionen bei 260° C | | | bei 280° C | |
|---|---|---|---|---|---|
| | 1. | 3. | 5. | 1. | 3. |
| keiner | 6,3 | 8,9 | 15,0 | 7,1 | 21,4 |
| 0,05 Teilen Verbindung 2 | | | | 3,7 | 7,5 |
| 0,05 Teilen Verbindung 6 | | | | 4,0 | 11,0 |
| 0,1 Teile Verbindung 8 | 2,4 | 3,0 | 4,1 | | |
| 0,05 Teilen Verbindung 9 | | | | 3,4 | 5,2 |
| 0,025 Teilen Verbindung 11 | 3,6 | 5,3 | 7,9 | 4,7 | 9,8 |
| 0,05 Teilen Verbindung 11 | 2,6 | 3,3 | 4,2 | 3,2 | 4,6 |
| 0,1 Teile Verbindung 11 | 2,9 | 3,2 | 3,5 | 3,3 | 4,4 |
| 0,05 Teilen Verbindung 13 | | | | 5,7 | 14,0 |

Beispiel 21

Es wurde wie in Beispiel 20 verfahren, wobei ein anderes Polypropylen-Pulver verwendet wurde (Shell Carlona HY 61/1090/1324) von Pentaerythrit-tetrakis-[3-(3,5-ditertiär-butyl-4-hydroxyphenyl)-propionat] wurden 0,07 Teile eingesetzt.

| Stabilisator | Schmelzindex nach mehreren Extrusionen bei 260° C | | | bei 280° C | |
|---|---|---|---|---|---|
| | 1. | 3. | 5. | 1. | 3. |
| Keiner | 5,0 | 7,8 | 11,3 | 7,4 | 17,4 |
| 0,025 Teilen Verbindung 11 | 2,3 | 3,4 | 5,2 | 3,0 | 5,5 |
| 0,05 Teilen Verbindung 11 | 2,0 | 2,3 | 3,0 | 2,2 | 3,5 |

Beispiel 22 Polyäthylen

100 Teile hochmolekulares Polyäthylen-Pulver, (Lupolen 52 602 der Firma BASF) wurden mit 0,05 Teilen Pentaerythrit-tetrakis-[3-(3,5-ditertiärbutyl-4-hydroxyphenyl)-propionat] und den in der untenstehenden Tabelle angegebenen erfindungsgemässen Verbindungen gemischt und im Brabender Plastographen der Firma bei 220° C bei 50 Umdrehungen pro Minute geknetet. Während dieser Zeit wird der Knetwiderstand als Drehmoment kontinuierlich registriert. Im Verlauf der Knetzeit beginnt das Polymere nach längerer Konstanz zu vernetzen, was anhand der raschen Zunahme des Drehmoments festgestellt werden kann. Die Wirksamkeit der Stabilisatoren äussert sich in einer Verlängerung der Konstantzeit.

| Stabilisator | Zeit in Minuten, bis sich das Drehmoment ändert |
|---|---|
| 0,1 Teil Verbindung 1 | 7 |
| 0,1 Teil Verbindung 2 | 7 |
| 0,1 Teil Verbindung 3 | 11 |
| 0,1 Teil Verbindung 4 | 10 |
| 0,1 Teil Verbindung 5 | 5 |
| 0,1 Teil Verbindung 6 | 8 |
| 0,1 Teil Verbindung 7 | 6 |
| 0,1 Teil Verbindung 8 | 17 |
| 0,1 Teil Verbindung 9 | 13 |
| 0,1 Teil Verbindung 10 | 12,5 |
| 0,1 Teil Verbindung 11 | 12,5 |
| 0,05 Teile Verbindung 11 | 9,0 |
| 0,025 Teile Verbindung 11 | 7,5 |
| 0,1 Teil Verbindung 12 | 9 |
| 0,1 Teil Verbindung 13 | 10 |
| 0,1 Teil Verbindung 14 | 13 |
| keiner | 3 |

| Grundöl: solvent Neutralöl, Viskosität bei 100° C 10.6 c St ($mm^2/sec$) | | | |
|---|---|---|---|
| Verbindung Nr. | Konz. % | Beschleunigter CIGRE Säurezahl (mg KOH/g) | ROBOT (ASTMD-2272) Bomben-leben min. |
| 8 | 0.5 | 0.44 | 116 |
| 10 | 0.5 | 0.26 | 459 |
| 18 | 0.5 | 0.22 | 322 |
| 11 | 0.5 | 0.85 | |
| Grundöl: ohne Zusatz | | 3.6 | 16 |

Beispiel 23

Prüfung des Oxidationsverhaltens von Turbinen- und Hydraulikölen

a) Beschleunigte «Circle»-Methode (Modifizierte Methode IP 280)

Durch 25 g Öl wird bei 150° C während 4 Stunden ein Sauerstoffstrom von 4 l/h durchgeleitet. Das Öl enthält als Katalysator 20 mg Fe (III)/kg Öl und 20 mg Cu (II)/kg Öl. Nach Abschluss der Prüfung bestimmt man Menge der gebildeten, im Öl gelösten Menge Säure.

b) Oxidation in der rotierenden Bombe: «ROBOT» gemäss ASTM D 2272/IP 229

Das zu prüfende Öl wird zusammen mit Wasser und einer Kupferspirale als Katalysator in ein Glasgefäss gebracht und das Glasgefäss in ein mit Druckregistriervorrichtung versehenes Druckgefäss gestellt. Nachdem das Druckgefäss mit Sauersoff gespült und auf 6.25 bar (90 psi) eingestellt wurde, wird es in einem Bad bei konstanter Temperatur (150° C) axial rotiert. Die Zeit bis zum Eintreten eines Druckverlustes von 1.7 bar (25 psi) wird bestimmt.

**Patentansprüche**

1. Phosphonit der Formeln I und II

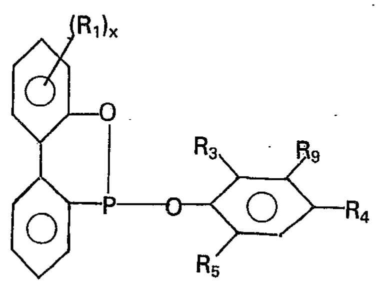

(I)

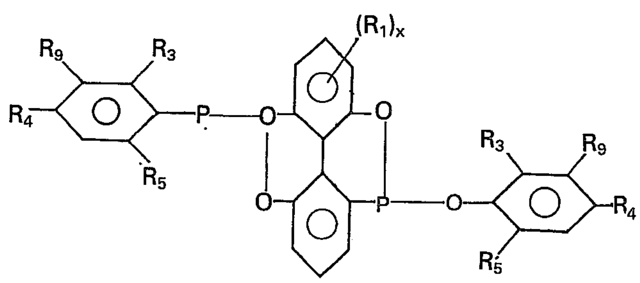

(II)

worin

$R_1$ $C_1$–$C_8$ Alkyl ist,

x 0, 1 oder 2 ist,

$R_3$ und $R_5$ unabhängig voneinander Wasserstoff, gegebenenfalls substituiertes $C_1$–$C_{25}$ Alkyl, $C_3$–$C_4$ Alkenyl, $C_3$–$C_4$ Alkinyl, $C_5$–$C_{12}$ Cycloalkyl, $C_6$–$C_{13}$ α-Methylcycloalkyl, $C_7$–$C_{14}$ Aralkyl oder $C_7$–$C_{14}$ Alkaryl sind,

$R_4$ eine der für $R_3$/$R_5$ gegebenen Bedeutungen hat oder ($C_1$–$C_{18}$ Alkoxy)-carbonyl, ($C_5$-$C_7$ Cycloalkoxy)-carbonyl, Phenoxycarbonyl, ($C_1$–$C_{12}$ Alkyl)-phenoxycarbonyl, $C_1$–$C_{18}$ Alkoxy oder 2-($C_1$–$C_{18}$ Alkoxycarbonyl)-äthyl ist,

wobei nicht alle drei Reste $R_3$, $R_4$ und $R_5$ zugleich Wasserstoff sind, und

wobei im Fall von $R_3$ und $R_5$ gleich tert.-Butyl $R_4$ nicht Methyl ist und

$R_9$ Wasserstoff, und falls $R_3$ Wasserstoff ist, auch Methyl bedeutet.

2. Phosphonit nach Anspruch 1 der Formel I, worin

x 0 ist,

$R_3$ und $R_5$ unabhängig voneinander Wasserstoff, $C_1$–$C_{12}$ Alkyl, Cyclohexyl, α-Methylcyclohexyl, Benzyl, α,α-Dimethylbenzyl oder ($C_1$–$C_{18}$ Alkoxy)-carbonyl-$C_1$–$C_8$-alkyl sind, und

$R_4$ eine der für $R_3$/$R_5$ gegebenen Bedeutungen hat oder ($C_1$–$C_{18}$ Alkoxy)-carbonyl, oder 2-($C_1$–$C_{18}$ Alkoxycarbonyl)-äthyl ist.

3. Phosphonit nach Anspruch 1 der Formel I, worin

x 0 ist,

$R_3$ und $R_5$ unabhängig voneinander $C_1$–$C_{12}$ Alkyl, Cyclohexyl, α-Methylcyclohexyl, Benzyl oder α,α-Dimethylbenzyl sind, oder eines von $R_3$ und $R_4$ Wasserstoff ist und das andere obige Bedeutung hat, und

$R_4$ Wasserstoff, $C_1$–$C_{12}$ Alkyl, ($C_1$–$C_{18}$ Alkoxy)-

carbonyl oder 2-($C_1$–$C_{18}$ Alkoxycarbonyl)-äthyl ist.

4. Phosphonit nach Anspruch 1 der Formel I, worin $R_9$ Wasserstoff ist.

5. Phosphonit nach Anspruch 1, nämlich das 6-(2,6-Di-isopropyl-4-tert.-butyl-phenoxy)-dibenz[c,e]-[1,2]oxaphosphorin.

6. Stabilisiertes organisches Material, enthaltend ein Phosphonit der Formel I nach Anspruch 1.

7. Stabilisiertes organisches Material nach Anspruch 7, dadurch gekennzeichnet, dass das Material ein Polyolefin ist.

8. Stabilisiertes organisches Material nach Anspruch 7, dadurch gekennzeichnet, dass das Material ein Schmieröl ist.

9. Phosphonit nach Anspruch 1, nämlich das 6-(2,4-Di-tert.octyl-phenoxy)-dibenz[c,e]-[1,2]oxaphosphorin.

10. Phosphonit nach Anspruch 1, nämlich das 6-(2,6-Di-tert.-butyl-phenoxy)-dibenz[c,e]-[1,2]oxaphosphorin.

11. Phosphonit nach Anspruch 1, nämlich das 6-(2,6-Di-tert.-butyl-4-isopropyl-phenoxy)-dibenz[c,e]-[1,2]oxaphosphorin.

**Claims**

1. A phosphonite of the formulae I and II

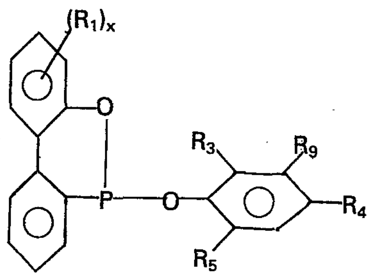

(I)

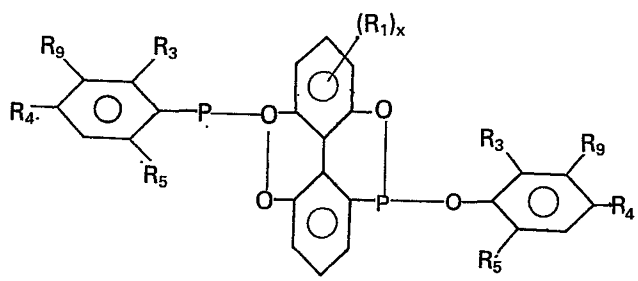

(II)

wherein

- $R_1$ is $C_1$–$C_8$-alkyl,
- x is 0, 1 or 2,
- $R_3$ and $R_5$ independently of one another are each hydrogen, unsubstituted or substituted $C_1$–$C_{25}$-alkyl, $C_3$–$C_4$-alkenyl, $C_3$–$C_4$-alkynyl, $C_5$–$C_{12}$-cycloalkyl, $C_6$–$C_{13}$-α-methylcycloalkyl, $C_7$–$C_{14}$-aralkyl or $C_7$–$C_{14}$-alkaryl,
- $R_4$ has one of the meanings given for $R_3$/$R_5$, or is ($C_1$–$C_{18}$-alkoxy)-carbonyl, ($C_5$–$C_7$-cycloalkoxy)-carbonyl, phenoxycarbonyl, ($C_1$–$C_{12}$-alkyl)-phenoxy-carbonyl, $C_1$–$C_{18}$-alkoxy or 2-($C_1$–$C_{18}$-alkoxy-carbonyl)-ethyl, the condition being that not all three radicals $R_3$, $R_4$ and $R_5$ are simultaneously hydrogen, and that, if $R_3$ and $R_5$ are tert-butyl, $R_4$ is not methyl, and
- $R_9$ is hydrogen and, if $R_5$ is hydrogen, also methyl.

2. A phosphonite according to Claim 1 of the formula I, wherein

- x is nought,
- $R_3$ and $R_5$ independently of one another are each hydrogen, $C_1$–$C_{12}$-alkyl, cyclohexyl, α-methylcyclohexyl, benzyl, α,α-dimethylbenzyl or ($C_1$–$C_{18}$-alkoxy)-carbonyl-$C_1$–$C_8$-alkyl, and
- $R_4$ has one of the meanings given for $R_3$/$R_5$, or is ($C_1$–$C_{18}$-alkoxy)-carbonyl or 2-($C_1$–$C_{18}$-alkoxy-carbonyl)-ethyl.

3. A phosphonite according to Claim 1 of the formula I, wherein

- x is nought,
- $R_3$ and $R_5$ independently of one another are $C_1$–$C_{12}$-alkyl, cyclohexyl, α-methylcyclohexyl, benzyl or α,α-dimethylbenzyl, or one of $R_3$ and $R_4$ is hydrogen, and the other has the above meaning, and
- $R_4$ is hydrogen, $C_1$–$C_{12}$-alkyl, ($C_1$–$C_{18}$-alkoxy)-carbonyl or 2-($C_1$–$C_{18}$-alkoxycarbonyl)-ethyl.

4. A phosphonite according to Claim 1 of the formula I wherein $R_9$ is hydrogen.

5. A phosphonite according to Claim 1, namely: 6-(2,6-di-isopropyl-4-tert-butyl-phenoxy)-dibenz[c,e]-[1,2]oxaphosphorine.

6. A stabilised organic material containing a phosphonite of the formula I according to Claim 1.

7. A stabilised organic material according to Claim 7, which material is a polyolefin.

8. A stabilised organic material according to Claim 7, which material is a lubricating oil.

9. A phosphonite according to Claim 1, namely: 6-(2,4-di-tert-octyl-phenoxy)-dibenz[c,e]-[1,2]-oxaphosphorine.

10. A phosphonite according to Claim 1, namely: 6-(2,6-di-tert-butyl-phenoxy)-dibenz[c,e]-[1,2]-oxaphosphorine.

11. A phosphonite according to Claim 1, namely: 6-(2,6-di-tert-butyl-4-isopropyl-phenoxy)-dibenz[c,e]-[1,2]oxaphosphorine.

**Revendications**

1. Phosphonite ayant les formules I et II

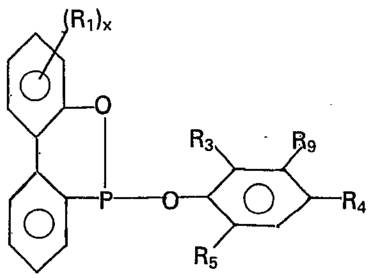

(I)

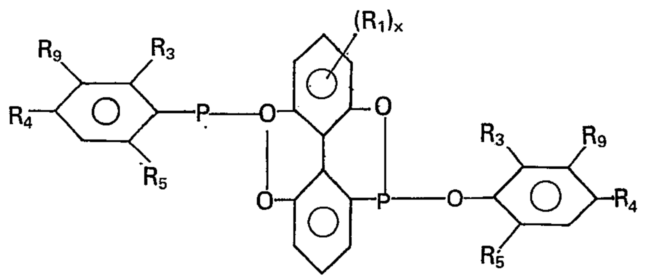

(II)

dans lesquelles

$R_1$ est un groupe $C_1$–$C_8$ alkyle,

x est 0, 1 ou 2,

$R_3$ et $R_5$ indépendamment l'un de l'autre sont de l'hydrogène, des groupes $C_1$–$C_{25}$ alkyle éventuellement substitués, $C_3$–$C_4$ alcényle, $C_3$–$C_4$ alcinyle, $C_5$–$C_{12}$ cycloalkyle, $C_6$–$C_{13}$ α-méthylcycloalkyle, $C_7$–$C_{14}$ aralkyle ou $C_7$–$C_{14}$ alkaryle,

$R_4$ a une des significations mentionnées pour $R_3$/$R_5$ ou bien est un groupe ($C_1$–$C_{18}$ alcoxy)-carbonyle, ($C_5$–$C_7$ cycloalcoxy)-carbonyle, phénoxycarbonyle, ($C_1$–$C_{12}$ alkyl)-phénoxycarbonyle, $C_1$–$C_{18}$ alcoxy ou 2-($C_1$–$C_{18}$ alcoxycarbonyl)-éthyle,

étant donné que les restes $R_3$, $R_4$ et $R_5$ ne sont pas tous les trois en même temps de l'hydrogène, et

étant donné que dans le cas où $R_3$ et $R_5$ sont identiquement un groupe tertio-butyle, $R_4$ n'est pas un groupe méthyle, et

$R_9$ est de l'hydrogène, et dans le cas où $R_5$ est de l'hydrogène, $R_9$ est également un groupe méthyle.

2. Phosphonite selon la revendication 1, ayant la formule I dans laquelle

x est 0,

$R_3$ et $R_5$ indépendamment l'un de l'autre sont de l'hydrogène, des groupes $C_1$–$C_{12}$ alkyle, cyclohexyle, α-méthyl-cyclohexyle, benzyle, α,α-diméthylbenzyle ou ($C_1$–$C_{18}$ alcoxy)-carbonyl-$C_1$–$C_8$ alkyle, et

$R_4$ a une des significations données pour $R_3$/$R_5$ ou bien est un groupe ($C_1$–$C_{18}$ alcoxy)-carbonyle, ou 2-($C_1$–$C_{18}$ alkcoxycarbonyl)-éthyle.

3. Phosphonite selon la revendication 1, ayant la formule I, dans laquelle:

x est 0,

$R_3$ et $R_5$ indépendamment l'un de l'autre sont des groupes $C_1$–$C_{12}$ alkyle, cyclohexyle, α-méthylcyclohexyle, benzyle, ou α,α-diméthylbenzyle, ou bien un des $R_3$ et $R_4$ est de l'hydrogène et l'autre a la signification ci-dessus, et

$R_4$ est de l'hydrogène, un groupe $C_1$–$C_{12}$ alkyle, ($C_1$–$C_{18}$ alcoxy)-carbonyle ou 2-($C_1$–$C_{18}$ alcoxycarbonyl)-éthyle.

4. Phosphonite selon la revendication 1, ayant la formule dans laquelle $R_9$ est de l'hydrogène.

5. Phosphonite selon la revendication 1, notamment la 6-(2,6-Di-isopropyl-4-butylphénoxy)-dibenzo[c,e]-[1,2]oxaphosphorine.

6. Matière organique stabilisée contenant une phosphonite de formule I selon la revendication 1.

7. Matière organique stabilisée selon la revendication 7, caractérisée par le fait que la matière est une polyoléfine.

8. Matière organique selon la revendication 7, caractérisée par le fait que la matière est une huile de graissage.

9. Phosphonite selon la revendication 1, notamment la 6-(2,4-Di-tert.-octyl-phénoxy)-dibenzo[c,e]-[1,2]oxaphosphorine.

10. Phosphonite selon la revendication 1, notamment la 6-(2,6-Di-tert.-butyl-4-phénoxy)-dibenzo[c,e]-[1,2]oxaphosphorine.

11. Phosphonite selon la revendication 1, notamment la 6-(2,6-Di-tert.-butyl-4-isopropyl-phénoxy)-dibenzo[c,e]-[1,2]oxaphosphorine.